# DEMANDE DE BREVET EUROPEEN

(11) **EP 1 545 130 A1**
(43) Date de publication de la demande: **22.06.2005**
(21) Numéro de dépôt: 03104710.3
(22) Date de dépôt: 16.12.2003
(51) Int. Cl.: H04N 7/16

(54) **Procédé de mise à jour de droits d'accès à des données à accès conditionel**

(71) Demandeur: Nagravision S.A., 1033 Cheseaux-sur-Lausanne (CH)
(72) Inventeur: Duval, Grégory, 1093 La Conversion (CH)
(74) Mandataire: Wenger, Joel-Théophile

(57) **Abrégé**

La présente invention concerne un procédé de mise à jour de droits d'accès à des données à accès conditionnel.

Dans ce procédé, on détermination tout d'abord un numéro de groupe dans lequel des droits d'accès doivent être mis à jour, puis on détermine tous les modules de sécurité liés à ce numéro de groupe. Ensuite, selon le mode de réalisation choisi, on détermine soit une clé de chiffrement pour chacun des modules dont les droits doivent être mis à jour, soit une clé d'abonnement (K_{AB}) commune à tous les modules de sécurité d'un groupe déterminé dont les droits sont à mettre à jour. Les droits sont ensuite chiffrés avec la clé correspondante. On envoie alors les messages d'autorisation (EMM) contenant lesdits droits d'accès chiffrés et un identifiant des modules de sécurité auxquels ils sont destinés. Ces droits sont ensuite reçus et déchiffrés dans les modules de sécurité correspondants auxdits identifiants.

## Description

La présente invention concerne un procédé de mise à jour de droits d'accès à des données à accès conditionnel, en particulier dans un système de télévision à péage, lorsqu'un abonné dispose de plusieurs décodeurs.

Actuellement, pour pouvoir accéder à un contenu chiffré correspondant à des événements diffusés par des opérateurs de télévision à péage, tels que des films, des matchs de sports ou autre, il faut acquérir un abonnement, un décodeur et un module de sécurité. Certains abonnés souhaitent disposer de plusieurs décodeurs et de plusieurs modules de sécurité pour que plusieurs utilisateurs puissent accéder aux événements diffusés à partir de plusieurs téléviseurs disposés dans des pièces différentes de leur habitation.

Dans ce cas, lorsqu'un droit d'accès à un contenu chiffré doit être chargé dans un module de sécurité d'un abonné, un centre de gestion envoie un message d'autorisation qui contient un numéro d'identification correspondant à un ou plusieurs modules de sécurité déterminés. Ce message contient également le droit d'accès à charger.

Les messages d'autorisation peuvent être formatés de trois manières différentes. Selon une première manière, les messages d'autorisation comportent un numéro unique d'identification permettant à un seul module de sécurité de recevoir et de déchiffrer le contenu du message. Selon une deuxième manière, le message d'autorisation contient un identifiant pris dans une plage déterminée d'identifiants, cette plage correspondant à un ensemble de modules de sécurité. Un tel ensemble peut par exemple contenir 256 modules de sécurité. Le message peut être reçu et déchiffré par tous les modules de cet ensemble. Selon une troisième manière, les messages d'autorisation sont envoyés de façon globale à tous les modules de sécurité d'un opérateur déterminé.

Un problème se pose pour la gestion des droits des abonnés possédant plusieurs décodeurs. En effet, actuellement, chaque décodeur est considéré comme indépendant. Lorsqu'un abonné ayant plusieurs décodeurs acquière un droit, le centre de gestion doit envoyer un message de gestion à chacun de ces décodeurs. Ainsi, il est possible que les droits ne soient pas chargés de façon identique dans chacun des modules de sécurité associés aux décodeurs de cet abonné.

La présente invention se propose de pallier les inconvénients des procédés de mise à jour des droits d'accès de l'art antérieur, en fournissant un procédé qui garantisse que les droits d'un abonné déterminé disposant de plusieurs décodeurs, sont chargés de façon identique dans tous les décodeurs de cet abonné.

Ce but est atteint par un procédé de mise à jour de droits d'accès tel que défini en préambule, utilisé notamment dans un système de télévision à péage comportant un centre de gestion des droits d'accès, ce centre de gestion transmettant ces droits à des décodeurs associés à des modules de sécurité, caractérisé en ce qu'il comporte les étapes de détermination d'un numéro de groupe dans lequel des droits d'accès doivent être mis à jour; de détermination de tous les modules de sécurité liés à ce numéro de groupe; de détermination des clés de chiffrement desdits modules de sécurité; de chiffrement des droits d'accès avec lesdites clés de chiffrement; d'envoi de messages d'autorisation (EMM) contenant lesdits droits d'accès chiffrés et un identifiant des modules de sécurité auxquels ils sont destinés et de réception et déchiffrement des droits d'accès dans les modules de sécurité correspondants auxdits identifiants.

Le but de l'invention est également atteint par un procédé de mise à jour de droits d'accès à des données à accès conditionnel, notamment dans un système de télévision à péage comportant un centre de gestion des droits d'accès, ce centre de gestion transmettant ces droits à des décodeurs associés à des modules de sécurité, caractérisé en ce qu'il comporte les étapes de détermination d'un numéro de groupe dans lequel des droits d'accès doivent être mis à jour; de détermination de tous les modules de sécurité liés à ce numéro de groupe; de détermination d'une clé d'abonnement (K_{AB}) commune à tous les modules de sécurité liés audit numéro de groupe; de chiffrement des droits d'accès avec ladite clé d'abonnement; d'envoi d'un message d'autorisation EMM contenant lesdits droits chiffrés et un identifiant des modules de sécurité auxquels ils sont destinés et de réception et déchiffrement des droits d'accès dans les modules de sécurité correspondant audit identifiant.

La présente invention permet d'assurer une uniformité des droits pour chaque décodeur d'un abonné, de sorte que les droits dont dispose cet abonné à partir d'un de ses décodeurs seront également disponibles à partir de ses autres décodeurs. La gestion des abonnés est également plus simple du point du vue du centre de gestion, parce que les décodeurs des abonnés sont gérés de façon globale et non plus individuellement.

Dans certains modes de réalisation, l'invention permet également de diminuer de façon sensible, le nombre de messages d'autorisation qui doivent être transmis aux abonnés, ce qui libère de la bande passante pour d'autres applications.

La présente invention et ses avantages seront mieux compris grâce à la description détaillée qui va suivre et qui se réfère aux dessins annexés donnés à titre d'exemples nullement limitatifs, dans lesquels:
- la figure 1 illustre de façon schématique, un premier mode de réalisation du procédé selon la présente invention; et
- la figure 2 illustre un deuxième mode de réalisation du procédé de l'invention.

De façon bien connue, le contrôle d'accès à des données, par exemple dans le domaine de la télévision à péage, se déroule à partir d'un centre de gestion CG qui envoie des messages, notamment des messages d'autorisation EMM, à des décodeurs placés chez des abonnés. Chaque décodeur coopère avec un module de sécurité en charge des opérations de contrôle des droits. Les modules de sécurité contiennent notamment une clé de chiffrement K_{UA} qui est également mémorisé dans le centre de gestion de façon à permettre l'échange de données sécurisées entre le centre de gestion et le module de sécurité d'un décodeur.

Il est à noter qu'en général, le procédé selon l'invention est destiné à des personnes ayant souscrit un abonnement par exemple du type mensuel ou à durée indéterminée. Ce procédé peut toutefois également s'appliquer à des personnes possédant plusieurs décodeurs, mais qui ne sont pas nécessairement abonnées chez un opérateur. Ces personnes peuvent acquérir des droits sous la forme d'achats impulsifs ou par le biais de prépaiement. Dans ce cas, les décodeurs de ces personnes doivent être répertoriés si l'on souhaite éviter que les droits soient acquis à partir de l'un des décodeurs et qu'ils soient disponibles à partir d'autres décodeurs qui n'appartiennent pas à la même personne. Dans la suite du texte, on parlera d'abonné pour toutes personnes ayant accès aux données à accès conditionnel, que les droits soient acquis par un abonnement valable pour un certain temps ou un certain montant, par l'achat impulsif ou par prépaiement ou par toute autre forme d'acquisition des droits. Les décodeurs appartenant à un abonné font partie d'un groupe et l'on parlera indifféremment de numéro de groupe ou de numéro d'abonnement.

En référence aux figures, le procédé selon l'invention est mis en oeuvre à partir d'un centre de gestion CG qui contient, de façon conventionnelle, une liste des numéros uniques d'identification UA de chaque module de sécurité associé à des décodeurs appartenant aux abonnés dont ce centre gère les droits. Le centre de gestion contient également la clé de chiffrement K_{UA} associée à chaque numéro d'identification.

Dans le procédé selon l'invention, chaque abonné dispose d'un numéro d'abonnement unique AB. La gestion de ces numéros d'abonnement, ainsi que d'autres aspects administratifs, est traité dans un système de traitement des abonnés SMS, qui communique avec le centre de gestion. Ce centre de gestion CG comporte une base de données contenant d'une part, le numéro d'abonné AB de chaque abonné dont le centre de gestion gère les droits, et d'autre part, les numéros uniques d'identification UA des modules de sécurité des abonnés. Cette base de données permet de déterminer pour un numéro d'abonné AB déterminé, quels sont les numéros d'identification UA des modules de sécurité dont il dispose.

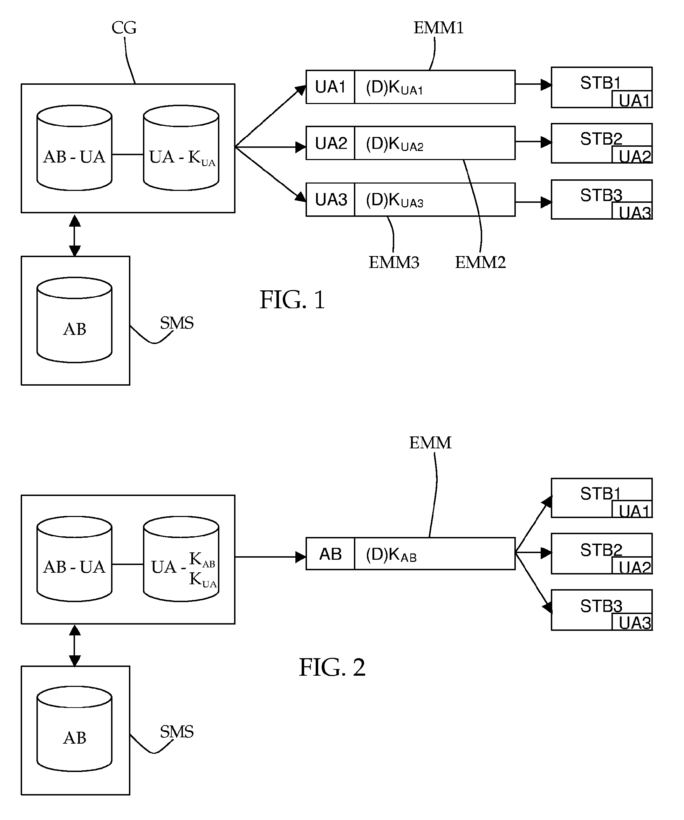

Dans un premier mode de réalisation, représenté par la figure 1, lorsqu'un message d'autorisation EMM doit être transmis à un abonné, il est tout d'abord déterminé quels sont les numéros uniques d'identification UA liés au numéro d'abonné AB auquel le message doit être transmis. Il y a autant de numéros uniques que l'abonné a de décodeurs. Lorsque ces numéros d'identification UA sont connus, l'étape suivante du procédé selon l'invention consiste à générer autant de messages d'autorisation EMM qu'il y a de modules de sécurité, et donc de décodeurs, liés à cet abonnement. De façon bien connue, les messages d'autorisation contiennent notamment un identifiant en clair, qui permet aux décodeurs de déterminer si les messages qu'ils reçoivent sont destinés aux modules de sécurité auxquels ils sont liés. Les messages d'autorisation contiennent également des droits qui sont chiffrés de manière à ne pouvoir être utilisés que par le décodeur auxquels ils sont destinés. Dans l'exemple de réalisation illustré par la figure 1, un abonné dispose de trois décodeurs et donc de trois modules de sécurité. Le centre de gestion génère donc trois messages d'autorisation, EMM1, EMM2, EMM3. Chacun de ces messages contient un identifiant UA1, UA2, UA3 permettant aux décodeurs de déterminer si ces messages leur sont destinés. Ils contiennent également les droits, chiffrés par la clé de chiffrement K_{UA1}, K_{UA2}, K_{UA3} contenue dans le centre de gestion et dans le module de sécurité ayant l'identifiant UA1, UA2, UA3 correspondant.

Lorsque les messages d'autorisation sont générés pour un numéro d'abonnement AB déterminé appartenant à un abonné ayant plusieurs décodeurs, le contenu en clair doit correspondre à des droits identiques pour chaque décodeur. Comme les droits sont chiffrés avec une clé différente pour chaque décodeur, le contenu chiffré est différent. Le déchiffrement des droits se déroule de façon conventionnelle, en utilisant la clé K_{UA} mémorisée dans le module de sécurité associé au décodeur qui a reçu le message.

Dans un deuxième mode de réalisation de l'invention illustré schématiquement par la figure 2, le centre de gestion génère un seul message d'autorisation EMM pour tous les décodeurs liés à un numéro d'abonnement déterminé. Pour ceci, le centre de gestion contient comme précédent, une liste des numéros d'abonnement AB, associée aux numéros uniques d'identification UA des modules de sécurité appartenant à chaque abonné. Le centre de gestion contient en outre, pour chaque numéro unique d'identification UA, deux clés de chiffrement. La première clé K_{UA} est la même que celle utilisée dans le mode de réalisation précédent et correspond à la clé unique d'un module de sécurité. La deuxième clé K_{AB} est une clé d'abonnement commune à tous les modules de sécurité appartenant à un même abonné. Elle est unique pour cet abonné de sorte que deux abonnés n'ont pas la même clé K_{AB}. La clé d'abonnement peut être chargée dans un nouveau module de sécurité acquis par un abonné disposant déjà d'un décodeur et d'un module de sécurité. Ce chargement peut se faire par exemple par l'intermédiaire d'un serveur vocal, auquel l'abonné indique son numéro d'abonnement ainsi que le numéro unique d'identification UA du module de sécurité qu'il a acquis. Une clé peut lui être transmise dans un message sécurisé, cette clé pouvant être identique à une clé présente dans les modules de sécurité acquis précédemment, ou une nouvelle clé peut être envoyée à tous les modules de sécurité de l'abonné. La clé d'abonnement peut être chargée en même temps que l'on charge les droits pour un événement déterminé. Pour ceci, il est possible d'envoyer un seul message d'autorisation EMM contenant la clé d'abonnement K_{AB} et les droits. Ceci est possible pour autant que la bande passante disponible soit suffisante. Il est également possible d'envoyer la clé d'abonnement K_{AB} dans un message d'autorisation EMM indépendant des droits. Ceci permet de minimiser la bande passante nécessaire. La clé d'abonnement K_{AB} est ensuite mémorisée pour un usage ultérieur dans tous les modules de sécurité de l'abonné.

Le message d'autorisation EMM généré par le centre de gestion pour un abonné déterminé contient un identifiant commun à tous les décodeurs de l'abonné, cet identifiant pouvant par exemple être le numéro d'abonnement ou un identifiant qui en dérive. Il contient également des droits qui sont chiffrés au moyen de la clé K_{AB} commune à tous les modules de sécurité de l'abonné. De cette manière, un seul message peut être envoyé et utilisé par tout un groupe de décodeurs appartenant à un même abonné. Ce message est ensuite reçu par les décodeurs qui filtrent les messages d'autorisation EMM selon l'identifiant des modules de sécurité auxquels ils sont associés. Lorsque les messages sont reçus par les décodeurs concernés et qu'ils sont filtrés par ceux-ci, ils sont ensuite traités de façon conventionnelle par chacun des décodeurs et des modules de sécurité associés, pour en extraire les droits.

Le procédé selon l'invention est particulièrement intéressant du fait qu'il simplifie la gestion des messages pour les abonnés disposant de plusieurs décodeurs.

## Revendications

1. Procédé de mise à jour de droits d'accès à des données à accès conditionnel, notamment dans un système de télévision à péage comportant un centre de gestion des droits d'accès, ce centre de gestion transmettant ces droits à des décodeurs associés à des modules de sécurité, **caractérisé en ce qu'**il comporte les étapes de :
• détermination d'un numéro de groupe dans lequel des droits d'accès doivent être mis à jour;
• détermination de tous les modules de sécurité liés à ce numéro de groupe;
• détermination des clés de chiffrement desdits modules de sécurité;
• chiffrement des droits d'accès avec lesdites clés de chiffrement;
• envoi de messages d'autorisation (EMM) contenant lesdits droits d'accès chiffrés et un identifiant des modules de sécurité auxquels ils sont destinés;
• réception et déchiffrement des droits d'accès dans les modules de sécurité correspondants auxdits identifiants.

2. Procédé de mise à jour de droits d'accès selon la revendication 1, **caractérisé en ce que** la détermination des modules de sécurité liés à un numéro de groupe comporte une étape de recherche dans une base de donnée, des numéros uniques d'identification associés à ce groupe.

3. Procédé de mise à jour de droits d'accès à des données à accès conditionnel, notamment dans un système de télévision à péage comportant un centre de gestion des droits d'accès, ce centre de gestion transmettant ces droits à des décodeurs associés à des modules de sécurité, **caractérisé en ce qu'**il comporte les étapes de :
• détermination d'un numéro de groupe dans lequel des droits d'accès doivent être mis à jour;
• détermination de tous les modules de sécurité liés à ce numéro de groupe;
• détermination d'une clé d'abonnement (K_{AB}) commune à tous les modules de sécurité liés audit numéro de groupe;
• chiffrement des droits d'accès avec ladite clé d'abonnement;
• envoi d'un message d'autorisation EMM contenant lesdits droits chiffrés et un identifiant des modules de sécurité auxquels ils sont destinés;
• réception et déchiffrement des droits d'accès dans les modules de sécurité correspondant audit identifiant.
